# EUROPÄISCHE PATENTSCHRIFT

(11) **EP 3 423 769 B1**
(45) Veröffentlichungstag und Bekanntmachung des Hinweises auf die Patenterteilung: **08.01.2020**
(21) Anmeldenummer: 17709032.1
(22) Anmeldetag: 03.03.2017
(51) Int. Cl.: F27B 1/02, C04B 2/12, F27B 1/10, F27D 19/00, F27D 21/00

(54) **OFEN UND VERFAHREN ZUM BETREIBEN EINES OFENS**
FURNACE AND METHOD FOR OPERATING A FURNACE
FOUR ET PROCÉDÉ PERMETTANT DE FAIRE FONCTIONNER UN FOUR

(30) Priorität: 04.03.2016 DE 102016103937
(43) Veröffentlichungstag der Anmeldung: 09.01.2019
(73) Patentinhaber: Maerz Ofenbau AG, 8027 Zürich (CH); thyssenkrupp AG, 45143 Essen (DE)
(72) Erfinder: PIRINGER, Hannes, 5712 Beinwill am See (CH); BUCHER, Patrick, 5012 Schönenwerd (CH)
(74) Vertreter: thyssenkrupp Intellectual Property GmbH
(86) Internationale Anmeldenummer: PCT/EP2017/054987
(87) Internationale Veröffentlichungsnummer: WO 2017/149110

(56) Entgegenhaltungen:
- EP-A1- 2 478 314
- WO-A1-2011/114187
- JP-A- S61 146 741
- US-A- 3 771 946

## Beschreibung

Die Erfindung betrifft einen Ofen mit zwei vertikalen Schächten, die jeweils an ihrem oberen Ende eine Brenngutzufuhr und an ihrem unteren Ende einen Brenngutauslass aufweisen und die mittels eines Überströmkanals verbunden sind, wobei oberhalb des Überströmkanals jeweils mindestens ein Hauptbrenner angeordnet ist, dessen Brenngase im Brennbetrieb in dem jeweiligen Schacht mindestens bis hin zu dem Überströmkanal nach unten strömen, und wobei unterhalb des Überströmkanals jeweils eine Zufuhr für ein Kühlgas angeordnet ist, sodass in Kombination mit dem Betrieb eines Hauptbrenners in dem brennbetriebenen Schacht das nach unten strömende Brenngas des Hauptbrenners beziehungsweise ein dieses Brenngas umfassendes Rauchgas durch u.a. das aufsteigende Kühlgas in Richtung des Überströmkanals umgelenkt wird. Die Erfindung betrifft weiterhin ein Verfahren zum Betreiben eines solchen Ofens.

Derartige Öfen (vgl. z.B. DE 30 38 927 C2), die auch als Gleichstrom-Gegenstrom-Regenerativ-Öfen oder mit der Kurzbezeichnung GGR-Öfen bezeichnet werden und zumeist zum Brennen von karbonathaltigem Rohgut, insbesondere Kalkstein, Dolomit oder Magnesit genutzt werden, arbeiten zyklisch, wobei ein Brennen des Brennguts stets nur in einem der Schächte erfolgt, während der andere Schacht als Regenerativschacht arbeitet, in dem das dortige Brenngut beziehungsweise Rohgut mittels des über den Überströmkanal aus dem aktuell brennbetriebenen Schacht zugeführten Abgases für den sich anschließenden Brennzyklus in diesem Schacht vorgewärmt wird. Das Brennen des Brennguts in dem brennbetriebenen Schacht erfolgt im Gleichstrom, indem das schwerkraftbedingt von oben nach unten durch den brennbetriebenen Schacht geförderte Brenngut mit Brenngas durchströmt wird, das von am oberen Ende der Schächte angeordneten Brennern erzeugt wird. Eine Durchströmung des Brennguts in dem nicht-brennbetriebenen beziehungsweise regenerativ betriebenen Schacht erfolgt dagegen im Gegenstrom, wobei das über den häufig zwischen der vertikalen Mitte und dem unteren Drittel der Schächte angeordneten Überströmkanal zugeführte Abgas am oberen Ende des regenerativ betriebenen Schachts abgeführt wird.

Konventionelle GGR-Öfen eignen sich wegen der relativ langen Verweilzeit des Brennguts in der Brennzone in Kombination mit den relativ geringen Brenntemperaturen von üblicherweise zwischen 800°C und 1000°C vorteilhaft für die Herstellung von Branntkalk mit hoher Reaktivität, sogenanntem Weichbrand-Kalk. Nicht gut geeignet sind diese jedoch für die Herstellung von Branntkalk mit niedriger Reaktivität, sogenanntem Hartbrand-Kalk, weil die hierfür erforderliche weitgehend vollständige Entsäuerung des Brennguts nicht erreicht werden kann und zudem die für das Erzeugen von Hartbrand-Kalk erforderliche Sinterung, für die Brenntemperaturen deutlich über 1000°C (beispielsweise ca. 1700°C) erforderlich sind, in der Regel nicht durch eine entsprechend erhöhte Brennstoffzufuhr realisiert werden kann, weil dann das Brenngut infolge der für GGR-Öfen typischen relativ langen Verweilzeit in der Brennzone zu Klumpen versintert, die u.a. zu einem Verstopfen des Ofens führen können. Hinzu kommt, dass in konventionellen GGR-Öfen im Anfangsabschnitt der unterhalb des Überströmkanals gelegenen Kühlzone des brennbetriebenen Schachts eine teilweise Rekarbonisierung des Brennguts infolge der relativ intensiven Durchströmung mittels des aus der Brennzone kommenden Rauchgases kommt, das in diesem Bereich des brennbetriebenen Schachts in Richtung des Überströmkanals umgelenkt wird. Mit konventionellen GGR-Öfen sind derzeit bestenfalls Kalzinierungsgrade von 96% möglich.

Aus der EP 1 148 311 B1 ist ein Ofen mit einem einzelnen Schacht bekannt, der in die Seitenwände des Schachts integrierte Brenner aufweist, wobei das Brenngut im Gegenstrom von dem Brenngas durchströmt wird. In so einem Ofen wird der Brennstoff am unteren Ende der Brennzone zugeführt, wodurch in der Regel sehr hohe Brenntemperaturen erzeugt werden können. Ein solcher Ofen eignet sich grundsätzlich gut für die Herstellung von Hartbrand-Kalk, jedoch nicht gut für die Herstellung von Weichbrand-Kalk und weist außerdem den Nachteil auf, dass der energetische Wirkungsgrad im Vergleich zu einem GGR-Ofen deutlich niedriger ist.

Die US 3,771,946 A offenbart eine Ausgestaltungsform eines Doppelschachtofens, bei dem zwei Schächte durch zwei seitliche Bypasskanäle verbunden sind. In den Schächten sind jeweils unterhalb der Bypasskanäle eine Mehrzahl von Zusatzbrennern angeordnet. Diese Zusatzbrenner werden lediglich in dem jeweils regenerativ betriebenen Schacht genutzt.

Die JP S61 146741 A zeigt einen Doppelschachtofen, bei dem in jedem der beiden Schächte, neben einem Hauptbrenner, auf Höhe eines Überströmkanals zusätzlich noch eine Mehrzahl von Zusatzbrennern vorgesehen sind. Die Zusatzbrenner unterstützen die Kalzinierung des Brennguts in einer den jeweiligen Hauptbrenner umfassenden Hauptbrennzone.

Die WO 2011/114187 A1 offenbart einen Einschachtofen mit einer Mehrzahl von in insgesamt zwei oder drei Ebenen übereinander angeordneten Brennern.

Die WO 2011/072894 A1 beschreibt einen GGR-Kalkofen, bei dem ein Parameter der heißen Gase, der für die Ausbildung der Länge der durch die oberhalb eines Überströmkanals angeordneten Brenner erzeugten Flammen charakteristisch ist, durch eine direkte oder indirekte Messung im Bereich des Überströmkanals ermittelt und das Verhältnis von Brennstoff zu Verbrennungsluft in Abhängigkeit dieses Parameters geregelt wird, um eine vorgegebene Flammenlänge einzustellen.

Ausgehend von diesem Stand der Technik lag der Erfindung die Aufgabe zugrunde, einen Ofen anzugeben, der mit einem relativ hohen energetischen Wirkungsgrad eine Herstellung von u.a. Hartbrand-Kalk ermöglicht.

Diese Aufgabe wird mittels eines Ofens gemäß dem Patentanspruch 1 gelöst. Ein Verfahren zum Betreiben eines solchen Ofens sowie eine vorteilhafte Verwendung des erfindungsgemäßen Ofens und des erfindungsgemäßen Verfahrens sind Gegenstände der Patentansprüche 7 und 11. Bevorzugte Ausgestaltungen des erfindungsgemäßen Ofens und vorteilhafte Ausführungsformen des erfindungsgemäßen Verfahrens sind Gegenstände der weiteren Patentansprüche und ergeben sich aus der nachfolgenden Beschreibung der Erfindung.

Der Erfindung liegt der Gedanke zugrunde, Hartbrand-Kalk in einem Ofen herzustellen, der den grundsätzlichen Aufbau und damit auch die Vorteile, insbesondere hinsichtlich des energetischen Wirkungsgrad, eines GGR-Ofens aufweist, wobei vorgesehen ist, das Brenngut in dem jeweils brennbetriebenen Schacht in einer Hauptbrennzone oberhalb des Überströmkanals, in dem das Brenngut im Gleichstrom von dem mittels oberhalb dieser Brennzone angeordneten (Haupt-)Brennern erzeugten Brenngas durchströmt wird, zumindest teilweise zu kalzinieren und anschließend das Brenngut in einer Zusatzbrennzone, die unterhalb des Überströmkanals und somit insbesondere in einem Abschnitt des jeweiligen Schachts, der bei einem konventionellen GGR -Ofen dem Anfangsabschnitt der Kühlzone entspricht, mittels dort angeordneten Zusatzbrennern thermisch nachzubehandeln. Dabei kann das thermische Nachbehandeln insbesondere ein Sintern des kalzinierten Brennguts umfassen, wodurch die entsprechend niedrige Reaktivität (t60 > 2 min, insbesondere t60 >> 2 min), durch die sich Hartbrand-Kalk auszeichnet, erreicht werden kann. Da das Brenngut in dieser Zusatzbrennzone im Gegenstrom durchströmt wird, ist die Verweildauer des Brennguts in der Zusatzbrennzone ausreichend gering, sodass durch eine entsprechend hohe Brennstoffzufuhr zu den Zusatzbrennern der Zusatzbrennzone die für das Sintern erforderlichen relativ hohen Brenntemperaturen erreicht werden können, ohne dass dies im relevanten Ausmaß zu einem Versintern des Brennguts zu Klumpen führen würde. Weiterhin wird dadurch auch eine intensive Durchströmung des Brennguts mit dem aus der Hauptbrennzone stammenden Rauchgas vermieden, wodurch die von konventionellen GGR-Öfen bekannte Rekarbonisierung verhindert werden kann.

Diesem Grundgedanken entsprechend ist ein Ofen vorgesehen, der mindestens zwei vertikale Schächte aufweist, die jeweils an ihrem oberen Ende eine Brenngutzufuhr zur Aufgabe des Brennguts und an ihrem unteren Ende einen Brenngutauslass für den Abzug des Brennguts aufweisen und die weiterhin mittels eines Überströmkanals verbunden sind, wobei oberhalb des Überströmkanals jeweils mindestens ein Hauptbrenner vorgesehen ist. Die Ausgestaltung des Ofens insgesamt und insbesondere der Hauptbrenner ist dabei derart gewählt, dass dessen Brenngase im Brennbetrieb in dem jeweiligem Schacht zumindest bis zum Erreichen des Überströmkanals nach unten und damit im Gleichstrom mit dem insbesondere schwerkraftbedingt ausgehend von der Brenngutzufuhr zu dem Brenngutauslass zu transportierenden Brenngut strömen. Weiterhin ist bei dem Ofen unterhalb des Überströmkanals jeweils eine Kühlgaszufuhr vorgesehen, sodass in Kombination mit dem Betrieb des Hauptbrenners in dem brennbetrieben Schacht das nach unten strömende Brenngas des Hauptbrenners bzw. ein das Brenngas umfassendes Rauchgas, das zudem durch ein Kalzinieren des Brennguts freigesetztes Kohlendioxid umfasst, durch u.a. das aufsteigende Kühlgas in Richtung des Überströmkanals umgelenkt wird. In den Schächten ist jeweils mindestens ein Zusatzbrenner unterhalb des Überströmkanals angeordnet ist, durch dessen Betrieb die vorgesehene Realisierung einer Zusatzbrennzone unterhalb des Überströmkanals ermöglicht wird. Dabei ist vorgesehen sein, dass der oder die Zusatzbrenner nur in dem brennbetriebenen Schacht oder in beiden Schächten betrieben werden. Für eine gegebenenfalls vollautomatische Durchführung eines solchen Verfahrens weist der erfindungsgemäße Ofen dementsprechend eine Steuerungsvorrichtung auf, die einen Betriebszustand vorsieht, bei dem der oder die Zusatzbrenner nur in dem brennbetriebenen Schacht oder in beiden Schächten betrieben werden. Durch einen gleichzeitigen Betrieb der Zusatzbrenner in beiden Schächten kann eine besonders gute Temperaturverteilung in der Zusatzbrennzone des brennbetriebenen Schachts realisiert werden, sodass diese Art des Betreibens eines erfindungsgemäßen Ofens beziehungsweise ein solcher Betriebszustand des erfindungsgemäßen Ofens bevorzugt ist.

Die Bezeichnung der Schächte des erfindungsgemäßen Ofens als "vertikal" erfordert erfindungsgemäß nicht zwangsläufig, dass diese beziehungsweise ihre Längsachsen auch eine exakt vertikale Ausrichtung aufweisen. Ausreichend soll vielmehr eine exakt vertikale Richtungskomponente der Ausrichtung sein, wobei im Hinblick auf einen vorteilhaften schwerkraftbedingten Transport des Brennguts ein Winkel zwischen der tatsächlichen Ausrichtung und der exakt vertikalen Ausrichtung von höchstens 30°, vorzugsweise höchstens 15° und besonders bevorzugt von möglichst 0° (exakt vertikale Ausrichtung) vorgesehen sein sollte.

Ein erfindungsgemäßes Verfahren zum Betreiben eines gattungsgemäßen Ofens sieht vor, das Brenngut in dem aktuell brennbetriebenen Schacht in einer Hauptbrennzone, die oberhalb des Überströmkanals angeordnet ist und in der das Brenngut im Gleichstrom von dem mittels oberhalb dieser Brennzone angeordneten Hauptbrennern erzeugten Brenngases durchströmt wird, zumindest teilweise zu kalzinieren und anschließend das Brenngut in einer Zusatzbrennzone, die zwischen dem Überströmkanal und dem jeweiligen Zusatzbrenner angeordnet ist und in der das Brenngut im Gegenstrom von dem Brenngas, das von dem jeweiligen Zusatzbrenner erzeugt wird, durchströmt wird, thermisch nachzubehandeln. Dabei wird/werden der oder die Zusatzbrenner nur in dem brennbetriebenen Schacht oder in beiden Schächten betrieben.

Dabei kann das thermische Nachbehandeln insbesondere ein Sintern des Brennguts umfassen, wodurch Brenngut mit relativ geringer Reaktivität und somit insbesondere Hartbrand-Kalk hergestellt werden kann.

In einer weiterhin bevorzugten Ausführungsform des erfindungsgemäßen Verfahrens kann vorgesehen sein, dass durch eine Steuerung des Eintrags an thermischer Energie über die Hauptbrenner und die Zusatzbrenner das Brenngut in der Hauptbrennzone nur teilweise hinsichtlich eines Zielwerts für den Kalzinierungsgrad, der im Wesentlichen 100%, jedoch auch weniger betragen kann, kalziniert und in der Zusatzbrennzone abschließend hinsichtlich dieses Zielwerts für den Kalzinierungsgrad kalziniert wird. Sofern zusätzlich ein Sintern in der Zusatzbrennzone vorgesehen ist, kann ein solches abschließendes Kalzinieren infolge der endothermen Wirkung insbesondere dazu dienen, die Temperatur des über den Überströmkanal geführten Abgases trotz des für das Sintern in der Zusatzbrennzone erforderlichen, vergleichsweise hohen Temperaturniveaus (von beispielsweise ca. 1700°C) relativ gering zu halten. Dadurch kann insbesondere der Überströmkanal vor einer thermischen Überlastung geschützt werden und/oder der konstruktive Aufwand für eine Wärmeschutzauskleidung des Ofens und insbesondere des Überströmkanals gering gehalten werden.

Der erfindungsgemäße Ofen ermöglicht jedoch auch die Erzeugung eines im Wesentlichen vollständig kalzinierten Brennguts, ohne dass dies in der Zusatzbrennzone auch gesintert wird. Auf diese Weise kann beispielsweise Branntkalk mit hoher Reaktivität (t60 < 2 min), d.h. Weichbrand-Kalk, und mit hohem Kalzinierungsgrad (> 99%) erzeugt werden. Ebenso besteht die Möglichkeit, in vorteilhafter Weise Stückkalk mit wenig Feinanteil im ofenfallenden Kalk zu erzeugen.

In einer bevorzugten Ausgestaltung des erfindungsgemäßen Ofens kann vorgesehen sein, dass die Zusatzbrenner in eine Seitenwand des jeweiligen Schachts integriert sind. Dies stellt zum einen eine konstruktiv vorteilhafte Möglichkeit der Integration der Seitenbrenner dar. Weiterhin kann auf diese Weise eine möglichst vorteilhafte Temperaturverteilung innerhalb der Zusatzbrennzone realisiert werden. Dies gilt insbesondere dann, wenn in jedem Schacht eine Mehrzahl von Zusatzbrennern vorgesehen sind, die weiterhin bevorzugt möglichst gleichmäßig über dem Umfang oder der jeweiligen Seitenwand des Schachts verteilt angeordnet sind und/oder hinsichtlich ihres Abstands bezüglich einer Mitte (insbesondere einer Mittelebene bei einer unrunden Querschnittsform der Schächte oder einer Längsachse bei einer runden Querschnittsform der Schächte) des jeweiligen Schachts unterschiedlich angeordnet sind.

Für eine möglichst optimale Temperaturverteilung innerhalb der Zusatzbrennzone, insbesondere auch in Abhängigkeit von dem jeweils zu brennenden Brenngut, kann vorzugsweise vorgesehen sein, dass der Abstand der Zusatzbrenner bezüglich einer Mitte des jeweiligen Schachts, insbesondere auch nach dem Einbau, veränderbar ist. Hierfür können die Zusatzbrenner beispielsweise in Form von Brennerlanzen ausgebildet sein, die in Durchgangsöffnungen in den Seitenwänden der Schächte (entlang ihrer Längsachse) verschiebbar gelagert sind.

In einer weiterhin bevorzugten Ausgestaltung des erfindungsgemäßen Ofens kann vorgesehen sein, dass die Zusatzbrenner innerhalb der oberen Zweidrittel, der oberen Hälfte oder im oberen Drittel des unterhalb des Überströmschachts gelegenen Abschnitts des jeweiligen Schachts angeordnet sind. Dadurch können sich diese insbesondere in demjenigen Abschnitt des brennbetriebenen Schachts befinden, in dem die Umlenkung der Strömung des von dem oder den Hauptbrennern stammenden Brenngases beziehungsweise des dieses Brenngas umfassenden Rauchgases in Richtung des Überströmkanals erfolgt. Auf diese Weise kann mittels der Zusatzbrenner beziehungsweise der von diesen in dem brennbetriebenen Schacht erzeugten Zusatzbrennzone wirkungsvoll eine Rekarbonisierung des Brennguts unterdrückt und gleichzeitig die Länge der Zusatzbrennzone so gering gehalten werden, dass trotz der durch die Zusatzbrenner ermöglichten hohen Brenntemperaturen die Verweilzeit des Brennguts innerhalb der Zusatzbrennzone so gering ist, dass ein Versintern des Brennguts zu Klumpen wirkungsvoll verhindert ist.

Weiterhin bevorzugt kann vorgesehen sein, dass in den Schächten jeweils mehrere Zusatzbrenner in vorzugsweise bis zu drei unterschiedlichen Höhen (Verteilung entlang der Längsrichtungen der Schächte) angeordnet sind. Auch dies kann der Erzielung einer möglichst vorteilhaften Temperaturverteilung innerhalb der Zusatzbrennzone dienen.

Die Schächte des erfindungsgemäßen Ofens können vorzugsweise eine runde und insbesondere kreisförmige oder eine viereckige, insbesondere rechteckige, polygonartige oder quadratische Querschnittsform aufweisen. Andere Querschnittsformen, insbesondere andere eckige Querschnittsformen, sind jedoch ebenfalls vorteilhaft umsetzbar.

Die Erfindung wird nachfolgend anhand von in den Zeichnungen dargestellten Ausführungsbeispielen näher erläutert. In den Zeichnungen zeigt, jeweils in schematischer Darstellung:
- Fig. 1:: einen erfindungsgemäßen Ofen gemäß einer ersten Ausgestaltung in einem Vertikalschnitt;
- Fig. 2:: Strömungsverhältnisse in einem Ofen gemäß der Fig. 1 während eines Brennbetriebs des links dargestellten Schachts;
- Fig. 3:: einen erfindungsgemäßen Ofen gemäß einer zweiten Ausgestaltung in einem Vertikalschnitt;
- Fig. 4:: einen Ofen gemäß der Fig. 3 mit Schächten mit rechteckigen Querschnitten in einem Horizontalschnitt mit einer Ansicht von oben; und
- Fig. 5:: einen Ofen gemäß der Fig. 3 mit Schächten mit kreisförmigen Querschnitten in einem Horizontalschnitt mit einer Ansicht von oben.

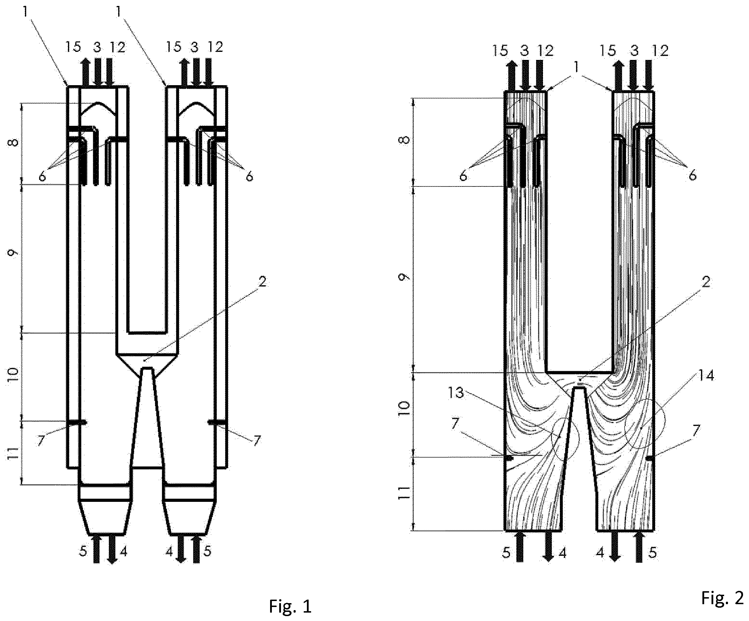

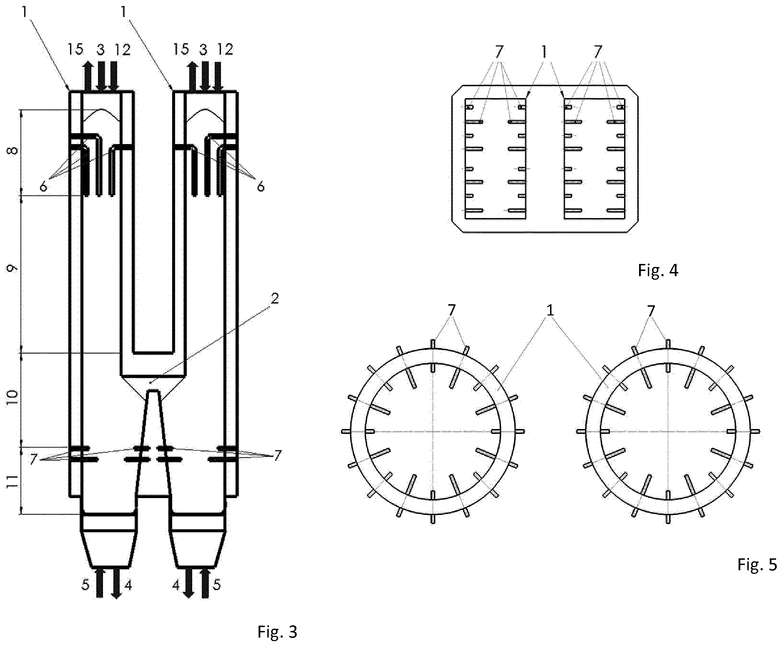

Die in den Zeichnungen dargestellten Öfen umfassen jeweils zwei vertikal ausgerichtete Schächte 1, die mittels eines in etwa auf Höhe des unteren Drittels der Längs- beziehungsweise Hocherstreckung der Schächte angeordneten Überströmkanals 2 miteinander verbunden sind. Jeder der Schächte 1 weist an seinem oberen Ende, insbesondere in der oberen Stirnseite, eine nicht im Detail dargestellte Brenngutzufuhr 3 auf, die verschließbar ausgebildet ist. Weiterhin weist jeder der Schächte 1 an seinem unteren Ende, insbesondere in der unteren Stirnseite, einen ebenfalls nicht im Detail dargestellten Brenngutauslass 4 auf, der ebenfalls verschließbar ausgebildet ist. Zudem ist jeder der Schächte 1 mit einer Kühlgaszufuhr 5, die im Bereich des unteren Endes angeordnet und insbesondere in die jeweilige untere Stirnseite integriert sein kann, versehen. Im Bereich des oberen Endes umfasst jeder der Schächte 1 eine Mehrzahl von Hauptbrennern 6, die beispielsweise über die jeweilige Seitenwand in den dazugehörigen Schachtinnenraum geführte und darin um ca. 90° abgewinkelt ausgebildete Brennerlanzen aufweisen können, deren Brenneröffhungen dadurch in Richtung des unteren Endes des jeweiligen Schachts 1 ausgerichtet sind. Weiterhin umfasst jeder der Schächte 1 einen (vgl. Fig. 1 und 2) oder eine Mehrzahl von (vgl. Fig. 3 bis 5) Zusatzbrennern 7, wobei mehrere Zusatzbrenner 7 je Schacht 1 in mehreren, hier konkret zwei Horizontalebenen verteilt in einem sich direkt unterhalb an den Überströmkanal 2 anschließenden Abschnitt des jeweiligen Schachts 1 angeordnet sind. Die Zusatzbrenner 7 sind ebenfalls in Form von Brennerlanzen ausgebildet, die über die Seitenwände der Schächte 1 in die Schachtinnenräume geführt sind, wobei in diesem Fall keine abgewinkelte Ausgestaltung sondern ein gerader Verlauf für die Brennerlanzen vorgesehen ist. Die Brennerlanzen 7 könnten auch um einen bestimmten Winkel nach oben oder unten geneigt vorgesehen sein. Dadurch ergibt sich eine horizontale oder schräg nach oben oder schräg nach unten geneigte Ausrichtung der Zusatzbrenner 7 im Gegensatz zu der vertikalen Ausrichtung der Hauptbrenner 6 im oberen Teil der einzelnen Schächte 1.

Im Betrieb eines der dargestellten Öfen wird Brenngut entweder in dem brennbetriebenen Schacht 1, oder im Regenerativschacht oder gleichzeitig in beiden Schächten kontinuierlich oder intermittierend infolge eines gesteuerten Abzugs über den dazugehörigen Brenngutauslass 4 von der oben gelegenen Brenngutzufuhr 3 bis zu dem Brenngutauslass 4 transportiert. Dabei wird das Brenngut zunächst durch eine Vorwärmzone 8, die sich zwischen der Brenngutzufuhr 3 und (ungefähr) den Brenneröffhungen der Hauptbrenner 6 erstreckt und in der eine Vorwärmung des Brennguts erfolgen soll, anschließend durch eine Hauptbrennzone 9, die sich ungefähr ausgehend von den Brenneröffnungen der Hauptbrenner 6 bis auf die Höhe des Überströmkanals 2 erstreckt, geführt. Ausgehend von dem Überströmkanal 2 schließt sich eine Zusatzbrennzone 10 an, die ungefähr auf Höhe der (unteren Ebene) des oder der Zusatzbrenner 7 in eine Kühlzone 11 übergeht. Bei dem Transport des Brennguts durch diese einzelnen Zonen werden die einzelnen Partikel somit zunächst in der Vorwärmzone 8 vorgewärmt, dann in der Hauptbrennzone 9 gebrannt und dabei bis zum Erreichen eines definierten Kalzinierungsgrads, der kleiner als ein abschließend für das herzustellende Brenngut vorgesehener Kalzinierungsgrad ist, vorkalziniert. Anschließend werden die einzelnen Partikel des Brennguts in der Zusatzbrennzone 10 erneut gebrannt und dabei abschließend, d.h. bis zum Erreichen des für das herzustellende Brenngut vorgesehenen Kalzinierungsgrads, kalziniert und gegebenenfalls auch gesintert. In der Kühlzone 11 erfolgt schließlich ein Kühlen des Brennguts durch das Kühlgas, bei dem es sich insbesondere um Luft handeln kann.

Das Brennen des Brennguts in der Hauptbrennzone 9 und der Zusatzbrennzone 10 des brennbetriebenen Schachts 1 erfolgt durch die Erzeugung thermischer Energie mittels der Hauptbrenner 6 und der Zusatzbrenner 7, indem diesen flüssiger, gasförmiger oder pulverförmiger Brennstoff zugeführt wird. Dieser Brennstoff tritt stirnseitig aus den Haupt- und Zusatzbrennern 6, 7 aus und verbrennt dort mit einem Verbrennungsgas (insbesondere Luft). Das Verbrennungsgas kann dabei separat über eine Brenngaszufuhr 12 zugeführt werden, wie dies in den Fig. 1 bis 3 für die Hauptbrennzone dargestellt ist. Möglich ist auch eine Zuführung über die Brennerlanzen selbst, wie dies insbesondere für die Zusatzbrenner 7 vorgesehen sein kann.

Der Verbrauch des oder der Zusatzbrenner(s) 7 des brennbetriebenen Schachts 1 an über diese zugeführtem Verbrennungsgas (sogenannte Primärluft) ist relativ gering, weil von diesem/-n zusätzlich oder hauptsächlich das von unten zugeführte Kühlgas, bei dem es sich ebenfalls um Luft handeln kann, zur Umsetzung des Brennstoffs genutzt werden kann. Daraus resultiert auch, dass ein erfindungsgemäßer Ofen trotz der Zusatzbrenner 7 nicht oder nur unwesentlich (mengenmäßig) mehr Abgas als ein konventioneller GGR-Ofen erzeugt.

Bei einem konventionellen GGR-Ofen, der die erfindungsgemäßen Zusatzbrenner 7 nicht umfasst, würde das bei der Kalzinierung des Brennguts in der (Haupt-)Brennzone 9 entstehende Rauchgas, das sich im Wesentlichen aus dem von den (Haupt-)Brennern 6 erzeugten Brenngas und bei der Kalzinierung des Brennguts freigesetztem Kohlendioxid besteht, ab der Höhe des Übergangskanals 2 und in einem sich daran anschließenden Abschnitt, der beispielsweise bis zu einem Drittel oder der Hälfte der Längs- beziehungsweise Hocherstreckung des Kühlbereichs 11 (dieser würde bei einem konventionellen GGR-Ofen die Zusatzbrennzone 10 umfassen) betragen kann, mit dem Kühlgas zusammentreffen, das das Brenngut ausgehend von der Kühlgaszufuhr 5 in Richtung nach oben durchströmen. Dadurch würde das Rauchgas in Richtung des Überströmkanals 2 umgelenkt werden und gemeinsam mit dem Kühlgas aufgrund des geringeren Drucks innerhalb des regenerativ betriebenen Schachts über den Überströmkanal 2 in diesen regenerativ betriebenen Schacht überströmen. Dabei würde das Brenngut, das in diesem unterhalb des Überströmkanals gelegenen Abschnitt angeordnet ist, zumindest teilweise noch in erheblichem Maße von dem aus der Brennzone stammenden Rauchgas durchströmt werden, was aufgrund der dort bereits deutlich reduzierten Temperaturen zu einer Rekarbonisierung führen würde, wodurch der in der Brennzone 9 erreichte Kalzinierungsgrad wieder reduziert würde. Eine solche Rekarbonisierung kann dabei insbesondere in den Randzonen dieses Abschnitts erfolgen.

Unter anderem wird eine solche Rekarbonisierung durch die erfindungsgemäße Anordnung der Zusatzbrenner 7 und der durch deren Betrieb erzeugten Zusatzbrennzone 10 vermieden, weil auf diese Weise die Temperatur in u.a. den besonders relevanten Bereichen 13 und 14 unterhalb des Überströmkanals 2 (vgl. Fig. 2) ausreichend hoch gehalten wird. Zusätzlich dazu können mittels des oder der Zusatzbrenner 7 in der Zusatzbrennzone 10 des brennbetriebenen Schachts 1 so hohe Brenntemperaturen erzeugt werden, dass eine nahezu vollständige Kalzinierung des Brennguts erreicht werden kann, ohne dass es im relevanten Ausmaß zu einem Versintern der Partikel des Brennguts zu Klumpen kommt, die zu einem Verstopfen des Ofens führen könnten. Dies ist im Wesentlichen auf die Durchströmung des Brennguts im Bereich der Zusatzbrennzone 10 im Gegenstrom zurückzuführen, wodurch ein ausreichend hoher Wärmeübergang trotz relativ geringer Verweilzeiten der Partikel des Brennguts innerhalb der Zusatzbrennzone 10 realisiert werden kann.

Das bei einem erfindungsgemäßen Ofen über den Überströmkanal 2 aus dem brennbetriebenen Schacht 1 in den regenerativ betriebenen Schacht 1 übergeströmte Rauchgas, das sich dann im Wesentlichen aus den Brenngasen der Hauptbrenner 6 und des oder der Zusatzbrenner(s) 7 sowie dem bei der Kalzinierung des Brennguts in der Hauptbrennzone 9 und der Zusatzbrennzone 10 freigesetztem Kohlendioxid und des Kühlgases 5 des brennbetriebenen Schachtes 1 zusammensetzt, durchströmt das innerhalb des regenerativ betriebenen Schachts 1 oberhalb des Überströmkanals 2 angeordnete Brenngut, um dieses für ein Brennen in einem darauf folgenden Zyklus im Betrieb des Ofens, in dem der zuvor brennbetriebe Schacht 1 regenerativ und der zuvor regenerativ betriebene Schacht 1 brennbetrieben wird, vorzuwärmen. Dabei vermischt sich das übergeströmte Rauchgas mehr oder weniger mit Kühlgas, das dem regenerativ betriebenen Schacht 1 über die dazugehörige Kühlgaszufuhr 5 zugeführt wurde. Problematisch daran kann bei einem konventionellen Ofen sein, dass das Kühlgas den regenerativ betriebenen Schacht 1 primär randseitig durchströmt, weil dieses von dem über den Überströmkanal 2 aus dem brennbetriebenen Schacht 1 einströmenden Rauchgas verdrängt wird. Dies führt zu einem relativ starken Abkühlen des in der Fig. 2 mit dem Bezugszeichen 14 gekennzeichneten Bereichs, in dem es in einem darauffolgenden Zyklus, bei dem dieser Schacht 1 dann brennbetrieben wird, verstärkt zu einer Rekarbonisierung des Brennguts kommen würde. Eine solche Rekarbonisierung kann bei einem erfindungsgemäßen Ofen besonders wirkungsvoll verhindert werden, wenn der oder die Zusatzbrenner 7, gegebenenfalls in reduziertem Maße, auch betrieben werden, wenn der jeweilige Schacht regenerativ betrieben wird, weil dann eine entsprechend starke Abkühlung in diesem Bereich 14 verhindert wird. Das Ofenabgas (bestehend aus dem aus dem brennbetriebenen Schacht 1 stammenden Rauchgas und dem dem regenerativ betriebenen Schacht zugeführten Kühlgas) wird, nachdem es das Brenngut oberhalb des Überströmkanals 2 durchströmt hat, über einen dazugehörigen Abgasauslass 15 abgeführt.

Für die beiden in den Fig. 1 bis 3 dargestellten Ausgestaltungsbeispiele eines erfindungsgemäßen Ofens können beispielsweise viereckige und insbesondere rechteckige, polygonartige oder runde und insbesondere kreisförmige Querschnittsformen für die beiden Schächte 1 vorgesehen sein, wie dies in den Fig. 4 und 5 dargestellt ist.

Die Fig. 4 und 5 zeigen zudem noch mögliche horizontale Anordnungen der in zwei Horizontalebenen angeordneten Zusatzbrenner 7 eines Ofens gemäß der Fig. 3. Demnach kann beispielsweise bei einem Ofen gemäß der Fig. 3 mit einem rechteckigen Querschnitt der Schächte 1 (vgl. Fig. 4) eine Verteilung der mehreren, konkret sechszehn Zusatzbrenner 7 in den zwei Horizontalebenen vorgesehen sein, bei der die acht Zusatzbrenner 7 jeder Ebene in nur zwei sich gegenüberliegenden Seitenwänden, insbesondere den dem jeweiligen anderen Schacht 1 zugewandten und abgewandten Seitenwänden angeordnet sind, wobei diese beispielsweise in gleichmäßiger Teilung über im Wesentlichen der gesamten Breite der jeweiligen Seitenwand verteilt angeordnet sind. Bei einem Ofen gemäß der Fig. 3 mit einem kreisförmigen Querschnitt der Schächte 1 (vgl. Fig. 5) ist ebenfalls eine Anordnung der radial ausgerichteten Brennerlanzen der Zusatzbrenner 7 über dem Umfang des kreisförmigen Querschnitts mit gleichmäßiger Teilung in den beiden Horizontalebenen vorgesehen. In beiden Ausgestaltungsbeispielen ist dargestellt, dass die einzelnen Zusatzbrenner 7 der beiden Horizontalebenen einen seitlichen Versatz zueinander aufweisen, der in etwa der Hälfte des Abstands zwischen zwei Zusatzbrenner 7 derselben Ebene entspricht. Ebenso ist es möglich, dass jeweils zwei Zusatzbrenner 7 der beiden Horizontalebenen im Wesentlichen exakt übereinander angeordnet sind. Auch ist es möglich, den seitlichen Versatz kleiner vorzusehen.

Die Zusatzbrenner 7 können auch unterschiedlich weit in den jeweiligen Schachtinnenraum hineinragen und damit unterschiedliche Abstände zu der jeweiligen Mitte der einzelnen Schächte 1 aufweisen. In den Fig. 4 und 5 ist gezeigt, dass die Zusatzbrenner 7 der einzelnen Horizontalebenen im Wesentlichen den gleichen Abstand zu einer Mitte des jeweiligen Schachts 1 aufweisen. Dabei wird die Mitte eines Schachts 1 bei einem Ofen gemäß der Fig. 4 von der parallel zu den die Zusatzbrenner 7 integrierenden Seitenwänden verlaufenden, vertikalen Mittenebene (die die Längsachse des jeweiligen Schachts 1 umfasst) und bei einem Ofen gemäß der Fig. 5 von der Längsachse des jeweiligen Schachts 1 definiert. Weiterhin ist vorgesehen, dass der Abstand der Zusatzbrenner 7 (konkret ihrer Brenneröffhungen) zu der jeweiligen Mitte jeweils in der oberen Horizontalebene kleiner als in der unteren Horizontalebene ist. Es besteht auch die Möglichkeit, diese Anordnung entsprechend umgekehrt vorzusehen und/oder unterschiedliche Abstände für die Zusatzbrenner der einzelnen Horizontalebenen vorzusehen.

### Bezugszeichenliste:

- 1: Schacht
- 2: Überströmkanal
- 3: Brenngutzufuhr
- 4: Brenngutauslass
- 5: Kühlgaszufuhr
- 6: Hauptbrenner
- 7: Zusatzbrenner
- 8: Vorwärmzone
- 9: Hauptbrennzone
- 10: Zusatzbrennzone
- 11: Kühlzone
- 12: Brenngaszufuhr
- 13: Bereich im brennbetriebenen Schacht
- 14: Bereich im regenerativ betriebenen Schacht
- 15: Abgasauslass

## Patentansprüche

1. Ofen mit mindestens zwei vertikalen Schächten (1), die jeweils an ihrem oberen Ende eine Brenngutzufuhr (3) und an ihrem unteren Ende einen Brenngutauslass (4) aufweisen und die mittels eines Überströmkanals (2) verbunden sind, wobei oberhalb des Überströmkanals (2) jeweils mindestens ein Hauptbrenner (6) und unterhalb des Überströmkanals (2) jeweils eine Kühlgaszufuhr (5) vorgesehen ist, wobei in den Schächten (1) jeweils mindestens ein Zusatzbrenner (7) unterhalb des Überströmkanals (2) angeordnet ist **gekennzeichnet durch** eine Steuerungsvorrichtung, die einen Betriebszustand vorsieht, bei dem der oder die Zusatzbrenner nur in dem brennbetriebenen Schacht (1) oder in beiden Schächten (1) betrieben wird/werden.

2. Ofen gemäß Anspruch 1, **dadurch gekennzeichnet, dass** die Zusatzbrenner (7) in eine Seitenwand des jeweiligen Schachts (1) integriert sind.

3. Ofen gemäß Anspruch 1 oder 2, **dadurch gekennzeichnet, dass** der Abstand der Zusatzbrenner (7) bezüglich einer Mitte des jeweiligen Schachts (1) veränderbar ist.

4. Ofen gemäß einem der vorhergehenden Ansprüche, **dadurch gekennzeichnet, dass** die Zusatzbrenner (7) innerhalb der oberen Zweidrittel, der oberen Hälfte oder im oberen Drittel des unterhalb des Überströmkanals (2) gelegenen Abschnitts des jeweiligen Schachts (1) angeordnet sind.

5. Ofen gemäß einem der vorhergehenden Ansprüche, **dadurch gekennzeichnet, dass** in den Schächten (1) jeweils mindestens zwei Zusatzbrenner (7) in unterschiedlichen Höhen angeordnet sind.

6. Ofen gemäß einem der vorherigen Ansprüche, **dadurch gekennzeichnet, dass** die Schächte (1) eine runde oder viereckige oder eine polygonartige Querschnittsform aufweisen.

7. Verfahren zum Betreiben eines Ofens mit mindestens zwei vertikalen Schächten (1), die jeweils an ihrem oberen Ende eine Brenngutzufuhr (3) und an ihrem unteren Ende einen Brenngutauslass (4) aufweisen und die mittels eines Überströmkanals (2) verbunden sind, wobei oberhalb des Überströmkanals (2) jeweils mindestens ein Hauptbrenner (6) und unterhalb des Überströmkanals (2) jeweils eine Kühlgaszufuhr (5) vorgesehen ist, wobei in den Schächten (1) jeweils mindestens ein Zusatzbrenner (7) unterhalb des Überströmkanals (2) angeordnet ist, und wobei das Brenngut in einem brennbetriebenen Schacht der beiden Schächte (1) in einer Hauptbrennzone (9) oberhalb des Überströmkanals (2) zumindest teilweise kalziniert und anschließend in einer Zusatzbrennzone (10), die zwischen dem Überströmkanal (2) und dem jeweiligen Zusatzbrenner (7) angeordnet ist, thermisch nachbehandelt wird, **dadurch gekennzeichnet, dass** der oder die Zusatzbrenner (7) nur in dem brennbetriebenen Schacht (1) oder in beiden Schächten (1) betrieben werden.

8. Verfahren gemäß Anspruch 7, **dadurch gekennzeichnet, dass** das Brenngut in der Zusatzbrennzone (10) gesintert wird.

9. Verfahren gemäß Anspruch 7 oder 8, **dadurch gekennzeichnet, dass** das Brenngut in der Hauptbrennzone (9) nur teilweise kalziniert und in der Zusatzbrennzone (10) abschließend kalziniert wird.

10. Verfahren gemäß einem der Ansprüche 7 bis 9, **gekennzeichnet durch** die Durchführung bei einem Ofen gemäß einem der Ansprüche 2 bis 6.

11. Verwendung eines Ofens gemäß einem der Ansprüche 1 bis 6 und/oder eines Verfahrens gemäß einem der Ansprüche 7 bis 10 zur Herstellung von Hartbrand-Kalk und/oder zur Herstellung von Weichbrand-Kalk mit einem Kalzinierungsgrad > 99%.

## Claims

1. Furnace with at least two vertical shafts (1), which comprise in each case at their upper end a combustible material feed (3) and at their lower end a combustible material outlet (4) and which are connected by means of an overflow channel (2), wherein at least one main burner (6) is provided in each case above the overflow channel (2) and a cooling gas feed (5) is provided in each case below the overflow channel (2), wherein in the shafts (1) at least one additional burner (7) is in each case arranged below the overflow channel (2), **characterized by** a control device, which provides an operating state in which the additional burner or burners is/are only operated in the combustion-operated shaft (1) or in both shafts (1).

2. Furnace according to Claim 1, **characterized in that** the additional burners (7) are integrated in a side wall of the respective shaft (1).

3. Furnace according to Claim 1 or 2, **characterized in that** the distance of the additional burners (7) with respect to a centre of the respective shaft (1) can be varied.

4. Furnace according to one of the preceding claims, **characterized in that** the additional burners (7) are arranged within the upper two thirds, the upper half or the upper third of the portion of the respective shaft (1) that is situated below the overflow channel (2).

5. Furnace according to one of the preceding claims, **characterized in that** in the shafts (1) at least two additional burners (7) are arranged in each case at different heights.

6. Furnace according to one of the preceding claims, **characterized in that** the shafts (1) have a round or rectangular or polygonal cross-sectional shape.

7. Method for operating a furnace with at least two vertical shafts (1), which comprise in each case at their upper end a combustible material feed (3) and at their lower end a combustible material outlet (4) and which are connected by means of an overflow channel (2), wherein at least one main burner (6) is provided in each case above the overflow channel (2) and a cooling gas feed (5) is provided in each case below the overflow channel (2), wherein in the shafts (1) at least one additional burner (7) is in each case arranged below the overflow channel (2), wherein the combustible material is at least partially calcined in a combustion-operated shaft of the two shafts (1) in a main combustion zone (9) above the overflow channel (2) and is then subjected to a thermal aftertreatment in an additional combustion zone (10), which is arranged between the overflow channel (2) and the respective additional burner (7), **characterized in that** the additional burner or burners (7) is/are operated only in the combustion-operated shaft (1) or in both shafts (1).

8. Method according to Claim 7, **characterized in that** the combustible material is sintered in the additional combustion zone (10).

9. Method according to Claim 7 or 8, **characterized in that** the combustible material is only partially calcined in the main combustion zone (9) and is finally calcined in the additional combustion zone (10).

10. Method according to one of Claims 7 to 9, **characterized by** being carried out in the case of a furnace according to one of Claims 2 to 6.

11. Use of a furnace according to one of Claims 1 to 6 and/or a method according to one of Claims 7 to 10 for producing hard-burned lime and/or for producing soft-burned lime with a degree of calcination of > 99%.

## Revendications

1. Four comprenant au moins deux puits verticaux (1) qui présentent à chaque fois au niveau de leur extrémité supérieure une alimentation en produit à brûler (3) et, au niveau de leur extrémité inférieure, une sortie de produit brûlé (4), et qui sont connectés au moyen d'un canal de débordement (2), à chaque fois au moins un brûleur principal (6) étant prévu au-dessus du canal de débordement (2) et à chaque fois une alimentation en gaz de refroidissement (5) étant prévue en dessous du canal de débordement (2), à chaque fois au moins un brûleur supplémentaire (7) étant disposé dans les puits (1) en dessous du canal de débordement (2), **caractérisé par** un dispositif de commande qui prévoit un état de fonctionnement dans lequel le ou les brûleurs supplémentaires est/sont mis en fonctionnement seulement dans le puits (1) dans lequel s'effectue la combustion, ou dans les deux puits (1).

2. Four selon la revendication 1, **caractérisé en ce que** les brûleurs supplémentaires (7) sont intégrés dans une paroi latérale du puits respectif (1).

3. Four selon la revendication 1 ou 2, **caractérisé en ce que** la distance du brûleur supplémentaire (7) à un centre du puits respectif (1) peut être modifiée.

4. Four selon l'une quelconque des revendications précédentes, **caractérisé en ce que** les brûleurs supplémentaires (7) sont disposés dans les deux tiers supérieurs, dans la moitié supérieure ou dans le tiers supérieur de la portion du puits respectif (1) placée en dessous du canal de débordement (2).

5. Four selon l'une quelconque des revendications précédentes, **caractérisé en ce qu'**à chaque fois au moins deux brûleurs supplémentaires (7) sont disposés à des hauteurs différentes dans les puits (1).

6. Four selon l'une quelconque des revendications précédentes, **caractérisé en ce que** les puits (1) présentent une forme en section transversale ronde ou rectangulaire ou polygonale.

7. Procédé pour faire fonctionner un four comprenant au moins deux puits verticaux (1) qui présentent à chaque fois au niveau de leur extrémité supérieure une alimentation en produit à brûler (3) et, au niveau de leur extrémité inférieure, une sortie de produit brûlé (4), et qui sont connectés au moyen d'un canal de débordement (2), à chaque fois au moins un brûleur principal (6) étant prévu au-dessus du canal de débordement (2) et à chaque fois une alimentation en gaz de refroidissement (5) étant prévue en dessous du canal de débordement (2), à chaque fois au moins un brûleur supplémentaire (7) étant disposé dans les puits (1) en dessous du canal de débordement (2), et le produit à brûler étant au moins en partie calciné dans un des deux puits (1) dans lequel s'effectue la combustion, dans une zone de combustion principale (9) au-dessus du canal de débordement (2) et étant ensuite post-traité thermiquement dans une zone de combustion supplémentaire (10) qui est disposée entre le canal de débordement (2) et le brûleur supplémentaire respectif (7), **caractérisé en ce que** le ou les brûleurs supplémentaires (7) est/sont mis en fonctionnement seulement dans le puits (1) dans lequel s'effectue la combustion, ou dans les deux puits (1).

8. Procédé selon la revendication 7, **caractérisé en ce que** le produit à brûler est fritté dans la zone de combustion supplémentaire (10).

9. Procédé selon la revendication 7 ou 8, **caractérisé en ce que** le produit à brûler est seulement calciné en partie dans la zone de combustion principale (9) et finit d'être calciné dans la zone de combustion supplémentaire (10).

10. Procédé selon l'une quelconque des revendications 7 à 9, **caractérisé par** sa mise en œuvre dans un four selon l'une quelconque des revendications 2 à 6.

11. Utilisation d'un four selon l'une quelconque des revendications 1 à 6 et/ou d'un procédé selon l'une quelconque des revendications 7 à 10 pour la fabrication de chaux vive dure et/ou pour la fabrication de chaux vive en morceaux avec un degré de calcination > 99 %.
